# EUROPÄISCHE PATENTANMELDUNG

(11) **EP 1 223 374 A2**
(43) Veröffentlichungstag der Anmeldung: **17.07.2002**
(21) Anmeldenummer: 01129528.4
(22) Anmeldetag: 11.12.2001
(51) Int. Cl.: F16L 9/00

(54) **Rohrleitungssystem, insbesondere zur Abführung von Abwässern in Gebäudeinstallationen**

(30) Priorität: 14.12.2000 DE 10062424
(71) Anmelder: Demiriz, Mete, 44623 Herne (DE); Sproten, Hans-Peter, 40468 Düsseldorf (DE)
(72) Erfinder: Demiriz, Mete, 44623 Herne (DE); Sproten, Hans-Peter, 40468 Düsseldorf (DE)
(74) Vertreter: Schneider, Uwe, Dipl.-Ing.

(57) **Zusammenfassung**

Die Erfindung betrifft ein Rohrleitungssystem (1), abschnittsweise gebildet aus miteinander verbindbaren Rohrstücken (2) und/oder Formstücken und/oder Verbindungsstücken, aus denen der jeweils benötigte Verlauf des Rohrleitungssystems (1) zusammensetzbar ist, wobei die Rohrstücke (2) und/oder Formstücke und/oder Verbindungsstücke einen senkrecht zur Fließrichtung des Abwassers (5) im wesentlichen nicht-kreissymmetrischen Querschnitt aufweisen. Ein derartiges Rohrleitungssystem (1) kann zur Abführung von innerhalb eines Gebäudes anfallenden Abwässern in Gebäudeinstallationen dienen und derart an Montageflächen (6) befestigbar sein, daß die Rohrstücke (2) und/oder Formstücke und/oder Verbindungsstücke weniger weit von Montageflächen (6) hervorkragen als hydraulisch äquivalent dimensionierte Rohrleitungssysteme kreissymmetrischen Querschnittes. Dadurch kann es auch zur geschoßweisen Entwässerung von Gebäuden (27) Verwendung finden. Das Rohrleitungssystem (1) kann dabei auf oder an den Außenmauern (6) von Gebäuden (27) montiert werden, indem es innerhalb von Dämmschichten (10) auf der Außenmauer (12) von Gebäuden (27) eingebracht wird und daher auch optisch nicht auffällig verläuft.

## Beschreibung

Die Erfindung betrifft ein Rohrleitungssystem, insbesondere zur Abführung von Abwässern in Gebäudeinstallationen gemäß Oberbegriff des Anspruches 1.

Die Ableitung von Schmutz- und Regenwasser in die Kanalisation erfolgt vorrangig durch Rohrleitungsanlagen, die horizontal und vertikal miteinander verbunden sind. Sie leiten das anfallende Abwasser von den jeweiligen Entwässerungsstellen, wie beispielsweise von Bädern und Toiletten, aber auch industrielles Abwasser und Regenwasser innerhalb eines Gebäudes in die Kanalisation. Die damit verbundenen vielschichtigen Problemstellungen, wie z. B. schalltechnische Belästigungen für die Benutzer oder Bewohner, der hohe technische Aufwand zur Einhaltung der brandschutztechnischen Maßnahmen z.B. bei der Überbrückung verschiedener Etagen sowie der bedeutende Platzbedarf für die Unterbringung der Entwässerungsleitungen im Gebäude ist aufwendig und zum Teil sehr kostspielig. Hinzu kommen bei der Ableitung von Regenwasser innerhalb des Gebäudes und bei der Entlüftung von Abwasserleitungen notwendige wärmetechnische Dämmmaßnahmen der Rohrleitungen, die eine Durchfeuchtung des Baukörpers durch Schwitzwasserbildung verhindern. Die Einhaltung von vorgeschriebenen relativ hohen Mindestgefällen schränkt z. B. die freie Gestaltung eines Bades und die Anschlußmöglichkeiten unterschiedlicher Entwässerungsgegenstände ein.

Somit werden durch die heutigen Vorgaben, Entwässerungsrohre mit kreissymmetrischen Querschnitten mit relativ großem Mindestgefälle und schall-, brand- und wärmetechnisch aufwendig innerhalb des Gebäudes von Wohneinheit zu Wohneinheit bzw. von Etage zu Etage zu führen, aufwendige und somit kostspielige Montagemethoden angewandt.

Der Montageaufwand erhöht sich bei der Sanierung und dem Umbau von Altbauten in Verbindung mit einer kompletten Sanierung oder Teilsanierung der sanitären Ausstattung. In der Regel müssen die alten Entwässerungsleitungen aufgrund des mangelnden Montageplatzes für eine neue Entwässerungsanlage demontiert und entfernt werden. Die Montage der neuen Leitungen nimmt durch die Ausführung in Vorwänden und Montageschächten wertvollen und somit teuren Wohnraum ein.

Während die Rohrleitungsmontage im Baukörper aus Gründen des Schall-, Brandund Wärmeschutzes immer aufwendiger wird, steigen insbesondere die Aufwendungen für die wärmetechnische Verbesserung der Gebäudeaußenhülle durch neue Fenster und die Dämmung der Außenwände in stetigem Maße. Der Wunsch zur Energieeinsparung führte zu Außenwand-Dämmsystemen, die in unterschiedlichen Stärken auf das Mauerwerk im Neu- und Altbau aufgebracht werden.

Während die Entwässerung der Dachflächen häufig durch Regenfallleitungen an der Außenwand erfolgt, bleibt diese Fläche für die Montage von Schmutzwasserleitungen unbenutzt. Unter anderem liegt dies an der bislang häufig nicht vorhandenen Möglichkeit, Rohrleitungen ohne optische Einbußen auf der ungedämmten Außenwand zu verlegen.

Ein wesentliches Hindernis beim Entwässern über Systeme auf der Außenwand eines Gebäudes stellt sich bislang durch die Frage nach geeigneten Abmessungen bzw. Dimensionen der Rohrleitungsanlage. Die in Form des kreissymmetrischen Rundrohres üblichen ca. 110 mm Mindestdurchmesser für Entwässerungsfallleitungen, an denen beispielsweise Klosettanlagen angeschlossen werden dürfen, erreichen zur Zeit je nach verwendetem Material einschließlich Verbindungs- und Befestigungselementen einen Randabstand der Rohraußenkante von ca. 150 Millimetern vom Baukörper. Somit ist ihre Integration in die Dämmung bzw. Verkleidung oder Verschalung eines Gebäudes häufig nicht möglich. Weiterer Hinderungsgrund einer solchen Montageform stellt bislang die unzureichende Verwirklichung des Frostschutzes dar.

Andererseits führte die Forderung nach Trinkwassereinsparung in den letzten Jahren zu einer Reihe von wassersparenden Sanitärobjekten. Diese Wassersparmaßnahmen führen jedoch zunehmend zu Problemen in der Abwasserhydraulik. Das Liegenbleiben von Feststoffen und Fäkalien in horizontalen Leitungen werden immer häufiger registriert.

Es sind schon Rohrleitungssysteme bekannt, die nicht kreissymmetrische Rohrquerschnitte aufweisen. Beispielsweise ist es aus der DIN 18461 bekannt, quadratische Regenfallrohre zu verwenden, die üblicherweise an der Außenwand eines Gebäudes verlaufen und das auf dem Dach anfallende Regenwasser vom Haus ableiten. Derartige Regenfallrohre dienen allerdings nicht zum Abführung von innerhalb des Gebäudes anfallenden Abwässern, vor allem ist durch die fehlende Dämmung der Regenfallrohr bei Außentemperaturen unter Null Grad ein frostfreier Betrieb dieser Regenfallrohre nicht gewährleistet. Weiterhin ist es aus der DIN 4263 bekannt, nicht kreissymmetrische Querschnitte wie etwa Eiquerschnitte oder Maulquerschnitte für das Ableiten von Abwässern im Kanalisationsbereich zu verwenden. Hierdurch sollen hydraulisch verbesserte Bedingungen für die Abführung von Abwässern erreicht werden, die beispielsweise an unterschiedliche Abflußmengen oder Einbauverhältnisse angepaßt werden können. Derartige Kanalisationsrohre werden aus Beton hergestellt und weisen daher große Gewichte und große Abmessungen auf, die eine Verwendung derartiger Kanalisationsrohre im Inneren eines Gebäudes von selbst verbieten.

Aufgabe der vorliegenden Erfindung ist es daher, ein Rohrleitungssystem bereitzustellen, das eine vereinfachte Entwässerung von Gebäuden erlaubt.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung geht aus von einem Rohrleitungssystem, abschnittsweise gebildet aus miteinander verbindbaren Rohrstücken und/oder Formstücken und/oder Verbindungsstücken, aus denen der jeweils benötigte Verlauf des Rohrleitungssystems zusammensetzbar ist, wobei die Rohrstücke und/oder Formstücke und/oder Verbindungsstücke einen senkrecht zur Fließrichtung des Abwassers im wesentlichen nicht-kreissymmetrischen Querschnitt aufweisen. Ein derartiges gattungsgemäßes Rohrleitungssystem wird dadurch weiterentwickelt, daß das Rohrleitungssystem zur Abführung von innerhalb eines Gebäudes anfallenden Abwässern in Gebäudeinstallationen dient und derart an Montageflächen befestigbar ist, daß die Rohrstücke und/oder Formstücke und/oder Verbindungsstücke weniger weit von Montageflächen hervorkragen als hydraulisch äquivalent dimensionierte Rohrleitungssysteme kreissymmetrischen Querschnittes. Hierdurch wird eine Verbesserung der Abwasserhydraulik durch eine Anordnung des im wesentlichen nicht-kreissymmetrischen Querschnittes derart erreicht, daß der Ablauf der Flüssigkeit in dem Rohrleitungssystem insgesamt mit höheren Pegelständen vor sich geht und damit ein Liegenbleiben von Feststoffen oder Fäkalien in liegenden Leitungen nicht oder nicht mehr so schnell auftreten kann. Darüber hinaus können die nicht-kreissymmetrischen Querschnitte des Rohrleitungssystems so angeordnet werden, daß sie gegenüber der Anbringungsfläche deutlich weniger hervorkragen als hydraulisch äquivalent dimensionierte Rohrleitungssysteme kreissymmetrischen Querschnittes, wodurch die Bauhöhe des Rohrleitungssystems auf einer Anbringungsfläche insgesamt gering zu halten ist.

Von deutlichem Vorteil ist es, wenn der nicht-kreissymmetrische Querschnitt des Rohrleitungssystems in zwei zueinander im wesentlichen senkrechten Raumrichtungen deutlich ungleiche Querschnittsausbildungen aufweist. Hierdurch ergeben sich zwei unterschiedliche Bauhöhen des Rohrleitungssystems, je nachdem welche der Raumrichtungen und damit der ungleichen Querschnittausbildungen z. B. auf einer Anbringungsfläche senkrecht zu dieser Anbringungsfläche angeordnet wird.

Diese Eigenschaft des Rohrleitungssystems läßt sich weiter verbessern, wenn der nicht-kreissymmetrische Querschnitt des Rohrleitungssystems in zwei zueinander im wesentlichen senkrechten Raumrichtungen deutlich ungleiche Abmessungen aufweist. Hierdurch ergeben sich zwei Vorzugsorientierungen des Rohrleitungssystems, wodurch das Rohrleitungssystem entweder horizontal oder vertikal an einer Anbringungsfläche angeordnet werden kann.

Eine erste Ausgestaltung sieht vor, daß die Rohrstücke und/oder Formstücke und/oder Verbindungsstücke einen ovalisierten Querschnitt, insbesondere einen doppeltsymmetrisch ausgebildeten ovalisierten Querschnitt aufweisen. Ein derartiger ovalisierter Querschnitt läßt sich einfach und kostengünstig herstellen, darüber hinaus sind die Materialeigenschaften durch die kontinuierlich gekrümmte Ausgestaltung des ovalen Querschnittes besonders günstig. Die bevorzugte doppeltsymmetrische Ausbildung erlaubt es darüber hinaus, die Rohrstücke und/oder Formstücke und/oder Verbindungsstücke um jeweils 180° gedreht einbauen zu können, ohne, daß ein genaues Passen der jeweils zusammen zu steckenden Rohrstücke und/oder Formstücke und/ oder Verbindungsstücke beachtet werden muß. Darüber weisen sind derartige Querschnitte vorteilhafte hydraulische Eigenschaften auf.

Eine andere Ausgestaltung sieht vor, daß die Rohrstücke und/oder Formstücke und/oder Verbindungsstücke einen im wesentlichen kastenförmigen Querschnitt aufweisen, wobei in weiterer Ausgestaltung der kastenförmige Querschnitt abgerundete Eckbereiche aufweisen kann. Ein derartiger kastenförmiger Querschnitt nutzt beispielsweise beim Einbau in Schächte oder dgl. den Einbauraum maximal aus und paßt sich beispielsweise vorgesehenen Schlitzen oder dgl. besonders gut an.

Es versteht sich von selbst, daß die Ausbildung der Querschnittsform des erfindungsgemäßen Rohrleitungssystems im Rahmen der vorliegenden Erfindung vielfältige Variationen erfahren kann. Insbesondere sind unsymmetrische Querschnittgestaltungen denkbar, wobei jeweils auch Anpassungen auf die vorliegenden Einbauverhältnisse erfolgen können. Insbesondere ist es denkbar, daß sowohl im wesentlichen horizontale als auch im wesentlichen vertikale Abschnitte des Rohrleitungssystems aus den gleichen nicht-kreissymmetrischen Querschnitten gebildet werden, so daß nur ein Ausgangsmaterial für diese Abschnitte benötigt wird.

Es ist weiterhin denkbar, daß die Rohrstücke und/oder Formstücke und/oder Verbindungsstücke durch Halteeinrichtungen an einer Montagefläche selbst festlegbar sind. Beispielsweise wird durch speziell dafür eingerichtete Halteeinrichtungen eine einfache Montage des Rohrleitungssystems selbst an Montageflächen ermöglicht, wobei in einer Weiterbildung etwa die Halteeinrichtungen laschenartige Anschraubkonsolen aufweisen können, mit denen die Rohrstücke und/oder Formstücke und/oder Verbindungsstücke an einer Montagefläche festlegbar sind. Die Anschraubkonsolen können etwa so an den Rohrstücken oder dgl. angeordnet sein, daß sie direkt an einer Montagefläche anliegen und Öffnungen für Befestigungsschrauben oder dgl. Befestigungselemente aufweisen, durch die die Rohrstücke oder dgl. direkt auf die Montageflächen oder durch Zwischenschichten von der Montagefläche getrennt befestigt werden können. Hierdurch ist eine sehr einfache und damit kostengünstige Montagemöglichkeit gegeben. Eine derartige Festlegung des erfindungsgemäßen Rohrleitungssystems ist besonders vorteilhaft, wenn die Festlegung an im wesentlichen senkrechten Montageflächen wie etwa an Wänden eines Bauwerkes oder dgl. erfolgen muß. Das Anhängen eines Abschnittes des Rohrleitungssystems an ein Wand läßt sich damit einfach, schnell und unter Beachtung des notwendigen Gefälles durchführen, wobei die mechanische Belastung der Halteeinrichtungen durch die statischen Kräfte wegen der geringeren Abstände der Abschnitte des Rohrleitungssystems von der Wand wesentlich minimiert werden.

Es ist in einer anderen Ausgestaltung ebenfalls denkbar, die Rohrstücke und/oder Formstücke und/oder Verbindungsstücke durch Kleben direkt an einer Montagefläche festlegbar sind. Durch das direkte Verkleben an einer Montagefläche werden separate Befestigungseinrichtungen unnötig, auch ist eine flächige Montage etwa mit einem flexiblen Kleber gleichzeitig zur Schallisolierung des Rohrleitungssystems geeignet. Somit können zwischenliegende Isolierschichten zur Schallisolierung entfallen.

Weiterhin kann das Rohrleitungssystem Übergangsstücke aufweisen, mit denen herkömmlich verwendete Einrichtungen zur Abwasserleitung an das Rohrleitungssystem anbindbar sind. Hierdurch ist beispielsweise auch eine Nachrüstung bestehender Rohrleitungssystem mit dem erfindungsgemäßen Rohrleitungssystem möglich, wie dies beispielsweise auch bei den heute üblichen Rohrleitungssystemen selbstverständlich ist.

Eine wesentliche vorteilhafte Eigenschaft des erfindungsgemäßen Rohrleitungssystems besteht darin, daß mit dem Rohrleitungssystem Abwässer geschoßweise über die Außenmauern eines Gebäudes abgeführt werden können. Die nur geringe Bauhöhe des erfindungsgemäßen Rohrleitungssystemes in einer der Abmessungen erlaubt es, daß das aus den Rohrstücken und/oder Formstücken und/oder Verbindungsstücken nicht-kreissymmetrischen Querschnittes gebildete Rohrleitungssystem z.B. auf den Außenmauern eines Gebäudes verlegbar ist, ohne daß das Rohrleitungssystem optisch sehr störend weit von der Anbringungsfläche auf der Außenmauer absteht.

Durch die Montage des Rohrleitungssystems auf der Außenmauer des Gebäudes wird eine geschoßweise Entwässerung über die Außenmauer des Gebäudes möglich, wodurch zum Beispiel auf aufwendige Brandschutzmaßnahmen innerhalb des Gebäudes verzichtet werden kann, da hierdurch das beispielsweise bei der üblichen Entwässerung notwendige Durchbrechen von Brandabschnitte trennenden Mauern verzichtet werden kann. Auch sind aufwendige Schallschutzmaßnahmen nicht mehr notwendig, da keine Geräusche in Räumen anderer Nutzer des Gebäudes mehr erzeugt werden. Auch können aufwendige Durchbrüche zur jeweils nächsten Etage für die Führung des Rohrleitungssystems sowie die Erstellung von großen Rohrschächten zur Aufnahme der Entwässerungsleitungen vermieden werden. Weiterhin besteht eine einfache Nachrüstungsmöglichkeit von Entwässerungsgegenständen, ohne daß Beeinträchtigungen in anderen Wohngeschossen eines Gebäudes auftreten können. Weiterhin bieten sich flexiblere Gestaltungsmöglichkeiten zum Beispiel bei der Ausstattung, Planung und Gestaltung von Bädern und WC-Räumen aufgrund möglicher geringerer Gefälle des erfindungsgemäßen Rohrleitungssystems. Auch können aufwendige Entwässerungsleitungen zum Sammeln und Ableiten der Abwässer im Kellergeschoß oder in schwer zugänglichen Grundkanälen unterhalb des Gebäudes entfallen und somit sind die vorgeschriebenen, wiederkehrenden Druckprüfungen der Grundleitungen nicht mehr oder nicht mehr so häufig notwendig. Auch kann die verkürzte Montagezeit innerhalb des Baukörpers dazu benutzt werden, die Koordination der unterschiedlichen Gewerke bei der Erstellung des Gebäudes zu vereinfachen.

Ein weitere vorteilhafte Eigenschaft kann darin gesehen werden, daß das aus den Rohrstücken und/oder Formstücken und/oder Verbindungsstücken nicht-kreissymmetrischen Querschnittes gebildete Rohrleitungssystem innerhalb auf den Außenmauern eines Gebäudes angebrachter Dämmschichten verlegbar ist. Durch die nicht kreissymmetrischen Ausgestaltung des Querschnittes ist es möglich, die Abmessungen des Rohrleitungssystems senkrecht zur Außenmauer des Gebäudes auf Dimensionen zu reduzieren, die unterhalb der derzeit üblichen Dämmstoffstärken liegen. Je nach Dicke der heute üblicherweise verwendeten Dämmschichten ist es sogar möglich, daß in weiterer Ausgestaltung das aus den Rohrstücken und/oder Formstücken und/oder Verbindungsstücken nicht-kreissymmetrischen Querschnittes gebildete Rohrleitungssystem nach außen flächenbündig unterhalb einer Dämmschicht verlegt werden kann. Somit fällt das Rohrleitungssystem optisch überhaupt nicht mehr auf. Gleichzeitig ist auch ein entsprechender Frostschutz des Rohrleitungssystems gewährleistet.

Weiterhin ist denkbar, daß die das Rohrleitungssystem bildenden Rohrstücke und/oder Formstücke und/oder Verbindungsstücke in vorgefertigte Bauelemente zur Wärmedämmung und/oder Feuchtigkeitsisolierung und/oder Schalldämmung einbettbar und mit diesen gemeinsam montierbar sind. Hierdurch ist beispielsweise das Rohrleitungssystem gegenüber Frostschäden, die gegebenenfalls durch die Verlegung des Rohrleitungssystems auf der Außenmauer des Gebäudes möglich wären, abgesichert. Gleiches gilt selbstverständlich für die Isolierung gegenüber Feuchtigkeit und Schall.

Eine weitere Vereinfachung der Montage läßt sich dadurch erreichen, wenn die zur Aufnahme des Rohrleitungssystems bestimmten Bauelemente zur Wärmedämmung und/oder Feuchtigkeitsisolierung und/oder Schalldämmung selbst Teile der Verkleidung der Außenmauer eines Gebäudes sind. Hierdurch sind keine zusätzlichen Arbeiten zur Dämmung des Rohrleitungssystems und dann zur Dämmung der Außenmauer des Gebäudes erforderlich, sondern dies kann in einem Arbeitsgang und damit kostensparend erfolgen. Auch sind die verwendeten Dämmmaterialien dann auf der gesamten Außenmauer des Gebäudes gleich und bieten daher gleiche Dämmwirkung.

Eine weitere Verbesserung läßt sich erreichen, wenn die zur Aufnahme des Rohrleitungssystems bestimmten Bauelemente zur Wärmedämmung und/oder Feuchtigkeitsisolierung und/oder Schalldämmung großflächige, plattenförmige Teile der Verkleidung der Außenmauer eines Gebäudes sind. Hierdurch läßt sich eine Vereinfachung der Befestigung des Rohrleitungssystems erreichen, das beispielsweise selbst gar nicht mehr an der Außenmauer befestigt werden muß, sondern von den Dämmaterialien selbst gehalten und mit diesem an der Außenwand des Gebäudes festgelegt werden kann.

Verbesserte Eigenschaften des erfindungsgemäßen Rohrleitungssystems ergeben sich dann, wenn die das Rohrleitungssystem bildenden Rohrstücke und/oder Formstücke und/oder Verbindungsstücke aus Werkstoffen wie Kunststoffen oder Metallen oder Keramik oder Verbundwerkstoffen gebildet sind. Derartige Materialien sind auch bei herkömmlichen Rohrleitungssystem vielfach bekannt und weitgehend zuverlässig erforscht. Dies gilt ebenfalls für die Verbindungen zwischen den das Rohrleitungssystem bildenden Rohrstücken und/oder Formstücken und/oder Verbindungsstücken, die miteinander jeweils durch Verkleben oder Verschrauben oder Verklemmen oder Verpressen oder Verhaken oder Vermuffen oder Kombinationen dieser Verbindungen dichtend aneinander festgelegt werden können. Dies gilt insgesamt für jede derzeit auch im Rohrleitungsbau verwendete Verbindungstechnik.

Eine weitere vorteilhafte Eigenschaft besteht darin, daß zur Verlegung des Rohrleitungssystems aus nicht-kreissymmetrischen Rohrstücken und/oder Formstücken und/oder Verbindungsstücken im Bereich liegender Leitungen ein geringeres Gefälle als bei Rohrleitungssystemen mit kreissymmetrischen Querschnitten erforderlich ist. Durch die Bildung der Querschnittsform läßt sich ein verbessertes Aufschwimmen von festen Bestandteil und Fäkalien innerhalb des Rohrleitungssystems erreichen, wodurch schon geringere Gefälle zu einer sicheren Abführung derartiger fester Bestandteil und Fäkalien führen. Dies bietet wesentlichen Freiraum für verbesserte Gestaltung von Abflußleitungen beispielsweise im Badbereich.

Eine besonders bevorzugte Ausführungsform des erfindungsgemäßen Rohrleitungssystems zeigt die Zeichnung.

Es zeigen:
- Figur 1: - eine erste denkbare Querschnittsform des erfindungsgemäßen Rohrleitungssystems mit einem ovalisierten Querschnitt,
- Figur 2: - eine weitere Querschnittsform des erfindungsgemäßen Rohrleitungssystems mit einem kastenförmigen, in den Ecken abgerundeten Querschnitt,
- Figur 3: - eine weitere Querschnittsform des erfindungsgemäßen Rohrleitungssystems mit einem dachförmigen, in den Ecken abgerundeten Querschnitt,
- Figur 4: - eine weitere Querschnittsform des erfindungsgemäßen Rohrleitungssystems mit einem rautenförmigen, in den Ecken abgerundeten Querschnitt,
- Figur 5: - eine typische Montage des erfindungsgemäßen Rohrleitungssystems auf der Außenhaut eines Gebäudes, vertieft in Dämmschichten auf der Außenhaut des Gebäudes liegend,
- Figur 6: - eine schematische Darstellung einer geschoßweisen Entwässerung eines Gebäudes unter Verwendung des erfindungsgemäßen Rohrleitungssystems.

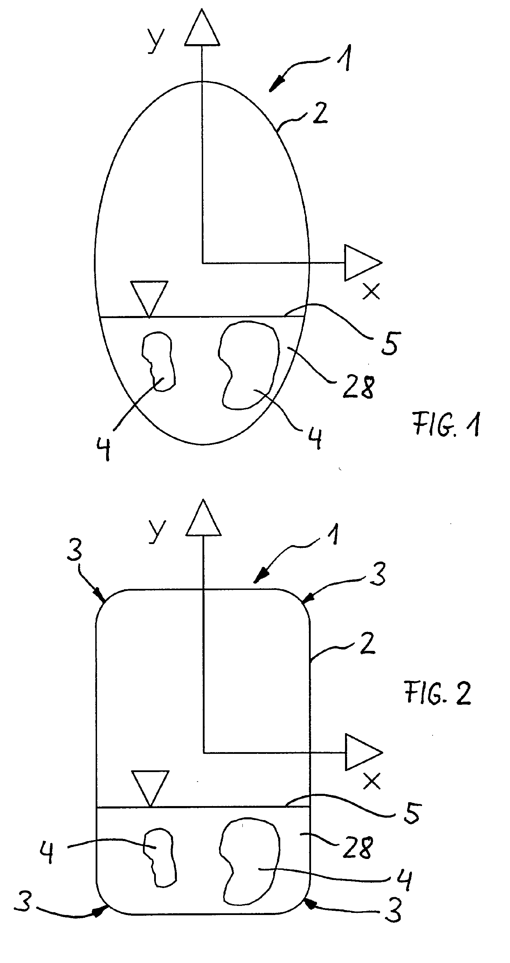

In der Figur 1 ist eine erste Ausführungsform des erfindungsgemäßen Rohrleitungssystems 1 in einem Querschnitt durch ein Rohrstück 2 schematisch dargestellt, wobei es sich bei diesem Rohrstück 2 selbstverständlich auch um den gleichen Querschnitt wie bei einem hier nicht weiter dargestellten Formstück oder einem Verbindungsstück handelt. Das Rohrstück 2 weist einen ovalisierten Querschnitt auf, wobei die beiden Halbachsen des Ovals entsprechend der Achsen x bzw. y des eingezeichneten Koordinatensystems orientiert sind. Es handelt sich hierbei um eine bevorzugte Ausführung mit doppeltsymmetrisch ausgebildetem, ovalisiertem Querschnitt. Das Rohrstück 2 ist dabei mit einer Flüssigkeit 28, beispielsweise Wasser bis zu einer Höhe des Wasserspiegels 5 gefüllt, wobei in dem Wasser 28 feste Bestandteile 4 schwimmen und durch das Rohrstück 2 abtransportiert werden.

Die Orientierung des Rohrstückes 2 mit dem ovalisierten Querschnitt derart, daß in y-Richtung die große Halbachse des Ovales verläuft und damit das Rohrstück 2 quasi hochkant angeordnet ist, sorgt dafür, daß der untere Bereich des ovalen Querschnittes sich deutlich höher mit dem Wasser 28 füllt als dies bei einem Rohr mit dem üblichen kreissymmetrischen Querschnitt der Fall wäre. Dadurch schwimmen die festen Bestandteile 4 besser in dem Wasser 28 auf und werden daher ohne die Bildung von Ablagerungen abtransportiert.

Gleichzeitig kann an einer nicht weiter dargestellten Befestigungsfläche das Rohrstück 2 in x-Richtung derart angeordnet werden, daß es wesentlich geringer von der Befestigungsfläche auskragt. Dadurch können die Rohrstücke 2 des erfindungsgemäßen Rohrleitungssystems 1 mit wesentlich geringerem Wandabstand montiert werden. Dies ruft auf den nicht dargestellten Halterungselementen wesentlich geringere statische Belastungen hervor als bei den weiter von einer Montageflächen angebrachten kreisförmigen Rohren, wodurch diese geringer dimensioniert werden können. Dies ist immer dann von Vorteil, wenn die derartige Rohrstücke 2 an senkrechten Wänden eines Gebäudes oder dgl. festzulegen sind und die Halterungen auf Biegung belastet werden.

In der Figur 2 ist eine andere Ausgestaltung des erfindungsgemäßen Rohrleitungssystems 1 anhand eines Rohrstückes 2 zu erkennen, wobei der Querschnitt des Rohrstückes 2 einen etwa kastenförmigen Querschnitt bildet. Der kastenförmigen Querschnitt ist an den Ecken mit Abrundungen 3 versehen. Auch hierbei sind die beiden Kantenlängen des kastenförmigen Querschnittes das Rohrstückes 2 an den Achsen des eingezeichneten Koordinatensystems orientiert, so daß der kastenförmigen Querschnitt in y-Richtung wesentlich größere Abmessungen als in der x-Richtung aufweist. Eine durch das Rohrstück 2 hindurch abfließende Wassermenge 28 bildet dabei einen wiederum wesentlich höheren Wasserspiegels 5 als dies bei einem kreiszylindrischen Rohr herkömmlicher Bauart der Fall wäre. Die festen Bestandteile 4 schwimmen dadurch besser auf und werden besser abtransportiert.

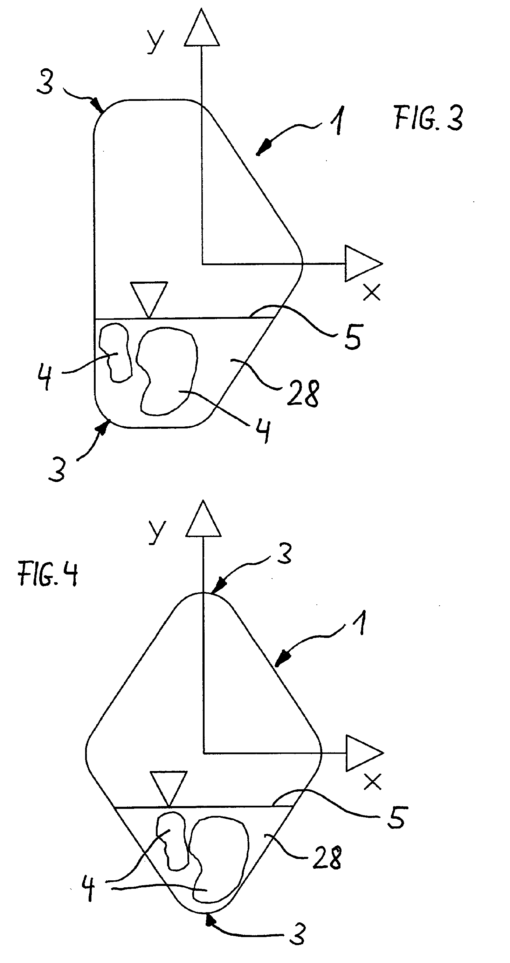

In den Figuren 3 und 4 sind weitere denkbare Ausgestaltungen des Querschnittes des Rohrstückes 2 zu erkennen, wobei es sich bei der Figur 3 um einen dachförmig in Längsrichtung erweiterten kastenförmigen Querschnitt handelt und in der Figur 4 um einen rautenförmigen Querschnitt, der hochkant angeordnet ist. Die entsprechend zu den Figuren 1 und 2 gemachten Ausführungen gelten sinngemäß selbstverständlich auch hier, wobei durch die jeweils andere Ausbildung der von dem Wasser 28 benetzten Innenfläche der Rohrstücke 2 unterschiedliche fluidische Eigenschaften hervorrufen.

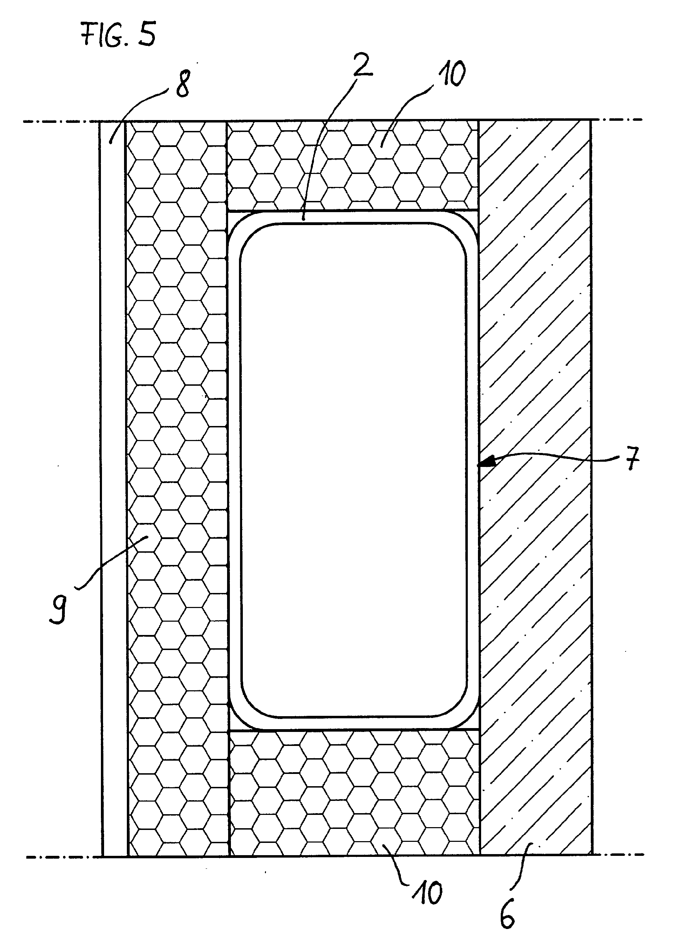

In der Figur 5 ist eine Ausgestaltung des erfindungsgemäßen Rohrleitungssystems 1 wiederum an einem hier vertikal verlaufenden Rohrstück 2 dargestellt, wobei das Rohrstück 2 innerhalb der Dämmung 9, 10 auf der Außenmauer 6 oder jeglicher anderer Wand eines Gebäudes 27 zu erkennen ist. Das hier gemäß der Figur 2 mit kastenförmigem Querschnitt ausgebildete Rohrstück 2 wird hierbei durch Verkleben der Klebefläche 7 mit der Außenmauer 6 gehalten, wofür etwa ein flexibler Kleber zwischen dem Rohrstück 2 und der Außenmauer 6 angeordnet werden kann. Ein derartiger flexibler Kleber sorgt gleichzeitig für eine Schallentkopplung zwischen dem Rohrstück 2 und der Außenmauer 6, so daß Fließgeräusche in dem Rohrstück 2 nicht auf die Außenmauer 6 übertragen werden. Es sind selbstverständlich andere Festlegungen des Rohrstückes 2 an der Außenmauer 6 denkbar.

Aufgrund der kastenförmigen, mit einer kurzen und einer langen Kante ausgebildeten Querschnittsform des Rohrstückes 2 kann dieses Rohrstück 2 vollständig innerhalb einer Dämmschicht 9, 10 angeordnet werden, die in ebenfalls grundsätzlich bekannter Weise auf die Außenmauer 6 zur Wärmedämmung eines Gebäudes 27 aufgebracht wird. Derartige Dämmschichten 9, 10 werden etwa auf die Außenfläche des Mauerwerks 6 aufgeklebt, wobei die Dicke der Dämmschicht 9, 10 üblicherweise im Bereich von 50 bis 100 Millimetern beträgt. In einer derartig dicken Dämmschicht 9, 10 kann nun ein entsprechender Kanal für die Aufnahme der Rohrstücke 2 freigelassen werden oder schon in den Platten der Dämmschicht 9, 10 mit vorgesehen sein, in die dann das Rohrstück 2 eingelassen werden kann. Aufgrund der nur geringen Abmessungen des Rohrstückes 2 in Richtung der x-Achse nimmt die Dämmschicht 9, 10 das Rohrstück 2 vollständig auf, wobei in der in der Figur 3 gezeigten Darstellung zur Dämmung des Rohrstückes 2 gegenüber Frost eine Dämmschicht 9 den schlitzförmigen Aufnahmeraum für das Rohrstück 2 gegenüber der Umgebung abdeckt. Die Dämmschicht 9 wird nach dem Montieren des Rohrstückes 2 über den Aufnahmeraum für das Rohrstück 2 eingesetzt und beispielsweise mit der Dämmschicht 10 verklebt oder auf sonstige Weise befestigt. Von Vorteil ist aufgrund der geringen Abmessungen des Rohrstückes 2 senkrecht zur Außenmauer 6, daß das Rohrstück 2 vollständig hinter der zusätzlichen Dämmschicht 9 verschwindet, wodurch zum einen ein flächenbündiger Abschluß der Dämmung 9, 10 etwa zum Auftragen eines Putzes 8 erreicht wird und zum anderen der Frostschutz des Rohrstükkes 2 sicher gewährleistet ist. Darüber hinaus wird die optische Wirkung der durch die Dämmung gebildeten Außenhaut des Gebäudes 27 in keiner Weise beeinträchtigt.

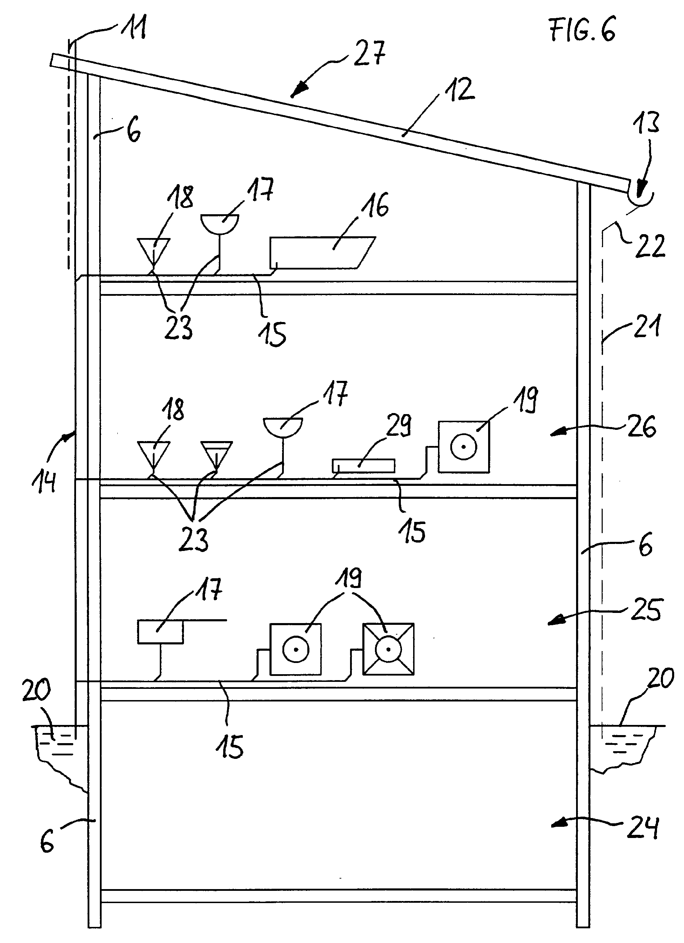

Derartige Anordnungen von Rohrstücken 2 des erfindungsgemäßen Rohrleitungssystems 1 können beispielsweise in gemäß der Figur 6 schematisch angedeuteter Weise zur geschoßweisen Entwässerung von Gebäuden 27 dienen, die mit herkömmlichen kreiszylindrischen Rohrleitungssystemen 1 nicht oder optisch nicht zufriedenstellend gelöst werden können.

In der Figur 6 ist in einer Schnittdarstellung ein typischer Querschnitt eines Gebäudes 27 zu erkennen, wobei in den verschiedenen Geschossen 24, 25, 26 und im Dach 12 des Gebäudes 27 unterschiedliche Sanitärgegenstände wie etwa Badewannen 16, Waschbecken 17, Toiletten 18, Waschmaschinen/Geschirrspüler 19 oder Duschen 29 zu erkennen sind. Üblicherweise werden diese Sanitärgegenstände 16, 17, 18, 19, 29 über jeweils vertikal innerhalb des Gebäudes 27 verlaufende Steigleitungen entwässert, die etwa in einem Rohrstrang zusammengefaßt werden. In der Darstellung gemäß Figur 6 wird nunmehr eine Entwässerung jedes einzelnen Geschosses 25, 26, 12 über ein auf der Außenseite des Mauerwerks 6 des Gebäudes 27 verlaufendes Fallrohr 14 vorgenommen, das in nicht weiter dargestellter Weise beispielsweise in einer Dämmung auf der Außenmauer 6 des Gebäudes 27 integriert oder von diesem aufgenommen sein kann.

Hierfür wird von jedem Sanitärgegenstand 16, 17, 18, 19, 29 beispielsweise über eine gemeinsame horizontale, erfindungsgemäß ausgestaltete Rohrleitung 15 und Zuläufen 23 jeweils anfallendes Wasser 28 durch die Außenmauer 6 zu dem Fallrohr 14 hin transportiert und von dort nach außerhalb des Gebäudes 27 unter das Gebäudeniveau 20 befördert. Derartige horizontale Rohrstücke 15 können beispielsweise in Zwischendecken oder innerhalb der jeweiligen Räume angeordnet sein, in denen sich auch die Sanitärgegenstände 16, 17, 18, 19, 29 befinden. Hierdurch werden beispielsweise die darüber oder darunter liegenden Nachbarn nicht gestört, wenn etwa Wasser 28 durch das horizontale Rohrstück 15 abgeleitet wird, das teilweise in den darunterliegenden Geschossen 24, 25 verläuft. Alle derartigen Rohrstücke 15 sowie das Fallrohr 14 werden dabei in erfindungsgemäßer Weise mit nicht-kreissymmetrischen Querschnitten ausgebildet.

Das Fallrohr 21 dient der Entwässerung der Dachrinne 13, die über einen Krümmer 22 an dem Fallrohr 21 flüssigkeitsleitend angeschlossen ist.

Durch die geschoßweise Entwässerung entfällt auch die Notwendigkeit, aufwendige Schalldämm- und Brandschutzmaßnahmen beim Durchtritt der Rohrstücke 15 zwischen einzelnen Geschossen 24, 25, 26 vorzusehen, da lediglich in der Außenmauer 6 des Gebäudes 27 Durchbrüche notwendig sind. Auch liegen relativ kurze Rohrlängen der Rohrstücke 15 vor, da möglicherweise auch mehrere derartige Fallrohre 14 an den verschiedenen Seiten des Gebäudes 27 vorgesehen werden können und daher jeder Sanitärgegenstand 16, 17, 18, 19, 29 an das jeweils nächstliegende Fallrohr 14 angeschlossen werden kann.

### Sachnummernliste

- 1 -: Rohrleitungssystem
- 2 -: Rohrstück
- 3 -: abgerundete Ecken
- 4 -: feste Bestandteile
- 5 -: Wasserspiegel
- 6 -: Mauerwerk
- 7 -: Klebestelle/Befestigungsstelle
- 8 -: Putzschicht
- 9 -: Dämmschicht
- 10 -: Wärmedämmung
- 11 -: Entlüftungsleitung
- 12 -: Dach
- 13 -: Dachrinne
- 14 -: vertikales Rohrstück
- 15 -: horizontales Rohrstück
- 16 -: Badewanne
- 17 -: Waschbecken
- 18 -: Toilette
- 19 -: Waschmaschine/Geschirrspüler
- 20 -: Bodenniveau
- 21 -: Regenfallrohr
- 22 -: Krümmer
- 23 -: Zulauf
- 24 -: Kellergeschoß
- 25 -: erstes Geschoß
- 26 -: zweites Geschoß
- 27 -: Gebäude
- 28 -: Wasser
- 29 -: Dusche

## Patentansprüche

1. Rohrleitungssystem (1), abschnittsweise gebildet aus miteinander verbindbaren Rohrstücken (2) und/oder Formstücken und/oder Verbindungsstücken, aus denen der jeweils benötigte Verlauf des Rohrleitungssystems (1) zusammensetzbar ist, wobei die Rohrstücke (2) und/oder Formstücke und/oder Verbindungsstücke einen senkrecht zur Fließrichtung des Abwassers (5) im wesentlichen nicht-kreissymmetrischen Querschnitt aufweisen,
**dadurch gekennzeichnet, daß**
das Rohrleitungssystem (1) zur Abführung von innerhalb eines Gebäudes anfallenden Abwässern in Gebäudeinstallationen dient und derart an Montageflächen (6) befestigbar ist, daß die Rohrstücke (2) und/oder Formstücke und/oder Verbindungsstücke weniger weit von Montageflächen (6) hervorkragen als hydraulisch äquivalent dimensionierte Rohrleitungssysteme kreissymmetrischen Querschnittes.

2. Rohrleitungssystem (1) nach Anspruch 1, **dadurch gekennzeichnet, daß** der nicht-kreissymmetrische Querschnitt des Rohrleitungssystems (1) in zwei zueinander im wesentlichen senkrechten Raumrichtungen (x, y) deutlich ungleiche Querschnittsausbildungen aufweist.

3. Rohrleitungssystem (1) nach einem der Ansprüche 1 oder 2, **dadurch gekennzeichnet, daß** der nicht-kreissymmetrische Querschnitt des Rohrleitungssystems (1) in zwei zueinander im wesentlichen senkrechten Raumrichtungen (x, y) deutlich ungleiche Abmessungen aufweist.

4. Rohrleitungssystem (1) nach einem der vorstehenden Ansprüche, **dadurch gekennzeichnet, daß** die Rohrstücke (2) und/oder Formstücke und/oder Verbindungsstücke einen ovalisierten Querschnitt, insbesondere einen doppeltsymmetrisch ausgebildeten ovalisierten Querschnitt aufweisen.

5. Rohrleitungssystem (1) nach einem der Ansprüche 1 bis 3, **dadurch gekennzeichnet, daß** die Rohrstücke (2) und/oder Formstücke und/oder Verbindungsstücke einen im wesentlichen kastenförmigen Querschnitt aufweisen.

6. Rohrleitungssystem (1) nach Anspruch 5, **dadurch gekennzeichnet, daß** der kastenförmige Querschnitt abgerundete Eckbereiche (3) aufweist.

7. Rohrleitungssystem (1) nach einem der vorstehenden Ansprüche, **dadurch gekennzeichnet, daß** die Rohrstücke (2) und/oder Formstücke und/oder Verbindungsstücke durch Halteeinrichtungen an einer Montagefläche (6), insbesondere an einer im wesentlichen vertikalen Montagefläche (6) selbst festlegbar sind.

8. Rohrleitungssystem (1) nach Anspruch 7, **dadurch gekennzeichnet, daß** die Halteeinrichtungen laschenartige Anschraubkonsolen aufweisen, mit denen die Rohrstücke (2) und/oder Formstücke und/oder Verbindungsstücke an einer Montagefläche (6) festlegbar sind.

9. Rohrleitungssystem (1) nach Anspruch 7, **dadurch gekennzeichnet, daß** die Rohrstücke (2) und/oder Formstücke und/oder Verbindungsstücke durch Kleben direkt an einer Montagefläche (6) festlegbar sind.

10. Rohrleitungssystem (1) nach einem der vorstehenden Ansprüche, **dadurch gekennzeichnet, daß** das Rohrleitungssystem (1) Übergangsstücke aufweist, mit denen herkömmlich verwendete Einrichtungen zur Abwasserleitung an das Rohrleitungssystem (1) anbindbar sind.

11. Rohrleitungssystem (1) nach einem der vorstehenden Ansprüche, **dadurch gekennzeichnet, daß** Abwässer (5) mit dem Rohrleitungssystem (1) geschoßweise über die Außenmauern (6) eines Gebäudes (27) abführbar sind.

12. Rohrleitungssystem (1) nach einem der vorstehenden Ansprüche, **dadurch gekennzeichnet, daß** das aus den Rohrstücken (2) und/oder Formstücken und/oder Verbindungsstücken nicht-kreissymmetrischen Querschnittes gebildete Rohrleitungssystem (1) auf den Außenmauern (6) eines Gebäudes (27) verlegbar ist.

13. Rohrleitungssystem (1) nach einem der vorstehenden Ansprüche, **dadurch gekennzeichnet, daß** das aus den Rohrstücken (2) und/oder Formstücken und/oder Verbindungsstücken nicht-kreissymmetrischen Querschnittes gebildete Rohrleitungssystem (1) innerhalb auf den Außenmauern (6) eines Gebäudes (27) angebrachter Dämmschichten (10) verlegbar ist.

14. Rohrleitungssystem (1) nach Anspruch 13, **dadurch gekennzeichnet, daß** das aus den Rohrstücken (2) und/oder Formstücken und/oder Verbindungsstücken nicht-kreissymmetrischen Querschnittes gebildete Rohrleitungssystem (1) innerhalb auf den Außenmauern (6) eines Gebäudes (27) angebrachter Dämmschichten (10) derart verlegbar ist, daß das Rohrleitungssystem (1) nach außen flächenbündig unterhalb einer Dämmschicht (9) angeordnet ist.

15. Rohrleitungssystem (1) nach einem der vorstehenden Ansprüche, **dadurch gekennzeichnet, daß** die das Rohrleitungssystem (1) bildenden Rohrstücke (2) und/oder Formstücke und/oder Verbindungsstücke in vorgefertigte Bauelemente zur Wärmedämmung und/oder Feuchtigkeitsisolierung und/oder Schalldämmung einbettbar und mit diesen gemeinsam montierbar sind.

16. Rohrleitungssystem (1) nach Anspruch 15, **dadurch gekennzeichnet, daß** die zur Aufnahme des Rohrleitungssystems (1) bestimmten Bauelemente zur Wärmedämmung und/oder Feuchtigkeitsisolierung und/oder Schalldämmung selbst Teile der Verkleidung der Außenhaut (6) eines Gebäudes (27) sind.

17. Rohrleitungssystem (1) nach Anspruch 16, **dadurch gekennzeichnet, daß** die zur Aufnahme des Rohrleitungssystems (1) bestimmten Bauelemente zur Wärmedämmung und/oder Feuchtigkeitsisolierung und/oder Schalldämmung großflächige, plattenförmige Teile der Verkleidung der Außenmauer (6) eines Gebäudes (27) sind.

18. Rohrleitungssystem (1) nach einem der vorstehenden Ansprüche, **dadurch gekennzeichnet, daß** das Rohrleitungssystem (1) gemeinsam mit den vorgefertigten Bauelementen zur Wärmedämmung und/oder Feuchtigkeitsisolierung und/oder Schalldämmung an den Außenmauern (6) eines Gebäudes (17) befestigbar ist.

19. Rohrleitungssystem (1) nach einem der vorstehenden Ansprüche, **dadurch gekennzeichnet, daß** die das Rohrleitungssystem (1) bildenden Rohrstücke (2) und/oder Formstücke und/oder Verbindungsstücke aus Werkstoffen wie Kunststoffen oder Metallen oder Keramik oder Verbundwerkstoffen gebildet sind.

20. Rohrleitungssystem (1) nach einem der vorstehenden Ansprüche, **dadurch gekennzeichnet, daß** die das Rohrleitungssystem (1) bildenden Rohrstücke (2) und/oder Formstücke und/oder Verbindungsstücke miteinander jeweils durch Verkleben oder Verschrauben oder Verklemmen oder Verpressen oder Verhaken oder Vermuffen oder Verschweißen oder Kombinationen dieser Verbindungen dichtend aneinander festlegbar sind.

21. Rohrleitungssystem (1) nach einem der vorstehenden Ansprüche, **dadurch gekennzeichnet, daß** zur Verlegung des Rohrleitungssystems (1) aus nicht-kreissymmetrischen Rohrstücken (2) und/oder Formstücken und/oder Verbindungsstücken im Bereich horizontaler Leitungen (15) ein geringeres Gefälle als bei Rohrleitungssystemen (1) mit kreissymmetrischen Querschnitten erforderlich ist.
